# EUROPÄISCHE PATENTSCHRIFT

(11) **EP 3 672 859 B1**
(45) Veröffentlichungstag und Bekanntmachung des Hinweises auf die Patenterteilung: **16.06.2021**
(21) Anmeldenummer: 18756160.0
(22) Anmeldetag: 02.08.2018
(51) Int. Cl.: B62D 5/04, H02K 11/20, G01F 23/26

(54) **LENKSYSTEM FÜR EIN FAHRZEUG**
STEERING SYSTEM FOR A VEHICLE
SYSTÈME DE DIRECTION CONÇU POUR UN VÉHICULE

(30) Priorität: 23.08.2017 DE 102017214717
(43) Veröffentlichungstag der Anmeldung: 01.07.2020
(73) Patentinhaber: Volkswagen Aktiengesellschaft, 38440 Wolfsburg (DE)
(72) Erfinder: DREYER, Dirk, 31655 Stadthagen (DE)
(86) Internationale Anmeldenummer: PCT/EP2018/070925
(87) Internationale Veröffentlichungsnummer: WO 2019/038044

(56) Entgegenhaltungen:
- EP-A1- 0 426 152
- DE-A1-102010 001 116
- DE-A1-102015 102 228
- DE-A1-102015 105 609

## Beschreibung

Die Erfindung betrifft ein Antriebsbauteil, insbesondere ein Lenksystem für ein Kraftfahrzeug.

Eine Vielzahl moderner Lenksysteme für Kraftfahrzeuge weisen einen Elektromotor auf, der mindestens einen Teil der Lenkkraft aufbringt. Bei vollautomatisiert fahrenden Fahrzeugen übernimmt das Lenksystem sogar die gesamte Lenkkraft. Lenksysteme müssen je nach Anwendungsfall eine Rückfallebene aufweisen oder mindestens teilweise redundant ausgebildet sein. Ein Problem von Lenksystemen ist ein Eintritt von Flüssigkeit, insbesondere Wasser. Diese Flüssigkeit kann beispielsweise über den Elektromotor eindringen und dann von dort zu einem Ausfall eines Steuergeräts bzw. dessen Leistungselektronik führen.

Aus der DE 10 2015 105 609 A1 ist ein Sensor zum Einbau in das Innere eines Antriebsbauteils, insbesondere einer Elektromotor-Getriebekombination, bekannt, mit einer Leiterbahn zur Ausbildung einer Kapazität und einem Isoliermaterial, welches die Leiterbahn aufnimmt, wobei die Leiterbahn auf einer Detektorseite des Sensors angeordnet ist, welche im eingebauten Zustand einen Innenraum des Antriebsbauteils zumindest teilweise begrenzt. Mittels des Sensors kann die eintretende Flüssigkeit detektiert werden, da sich die Kapazität in Abhängigkeit von der eintretenden Flüssigkeit verändert.

Aus der DE 10 2010 001 116 A1 ist ein gattungsgemäßes Antriebsbauteil bekannt.

Der Erfindung liegt das technische Problem zugrunde, ein gattungsgemäßes Antriebsbauteil mit einer vereinfachten Sensorik zur Erfassung von Flüssigkeit zu verbessern.

Die Lösung des technischen Problems ergibt sich durch ein Antriebsbauteil mit den Merkmalen des Anspruchs 1. Weitere vorteilhafte Ausgestaltungen der Erfindung ergeben sich aus den Unteransprüchen.

Das Antriebsbauteil umfasst einen Elektromotor und mindestens ein Steuergerät, wobei der Elektromotor mindestens eine Wicklung aufweist, wobei die Wicklung Anschlusspunkte für eine Leistungselektronik des mindestens einen Steuergeräts aufweist, wobei das Antriebsbauteil mindestens eine Sensorik zur Erfassung von Flüssigkeit aufweist, wobei die Sensorik eine Auswerte- und Steuereinheit aufweist, die mit den Anschlusspunkten der mindestens einen Wicklung verbunden ist, wobei die Auswerte- und Steuereinheit derart ausgebildet ist, ein Testsignal zu erzeugen und eine Impedanzänderung zu erfassen. Hierdurch kann ein separates Sensorelement eingespart werden, wobei das Sensorelement durch die ohnehin vorhandene mindestens eine Wicklung und eine parasitäre Kapazität zwischen den Anschlusspunkten gebildet wird, wobei eine Änderung der Kapazität durch eindringende Flüssigkeit und somit der resultierenden Impedanz erfasst wird. Ein bevorzugtes Anwendungsgebiet ist dabei ein Lenksystem für ein Kraftfahrzeug.

Dabei ist die Auswerte- und Steuereinheit derart ausgebildet, dass diese selektiv mit den Anschlusspunkten verbunden oder getrennt werden kann, wobei dies über Relais erfolgt. Somit kann die Auswerte- und Steuereinheit vor den hohen Betriebsströmen geschützt werden. Die Auswerte- und Steuereinheit kann dabei eine vollständig separate Einheit sein, aber auch in das Steuergerät integriert sein.

In einer Ausführungsform ist das Testsignal eine Anregungsfrequenz eines Schwingkreises, der durch die mindestens eine Wicklung und mindestens eine parasitäre Kapazität zwischen den Anschlusspunkten der mindestens einen Wicklung unter definierten Bedingungen gebildet wird. Beispielsweise wird die parasitäre Kapazität im trockenen Zustand bestimmt, wobei sich dann eine Resonanzfrequenz für den Schwingkreis einstellt. Wird dann der Schwingkreis angeregt und die Auswerte- und Steuereinheit registriert eine Schwingung, so ist keine Flüssigkeit eingedrungen. Wird hingegen keine Schwingung festgestellt, spricht dies für eingedrungene Flüssigkeit. Der Vorteil gegenüber einer reinen Impedanzänderung ist die größere Sensitivität.

In einer weiteren Ausführungsform weist der Elektromotor mindestens drei Wicklungen auf, wobei das Antriebsbauteil mindestens zwei Sensoriken aufweist, wobei die jeweiligen Auswerte- und Steuereinheiten an unterschiedlichen Anschlusspunkten der Wicklungen angeordnet sind. Neben einer Redundanz werden so auch unterschiedliche Bereiche auf Flüssigkeit untersucht. Spielt die volle Redundanz keine so große Rolle, so kann auch vorgesehen sein, dass die beiden Sensoriken eine gemeinsame Auswerte- und Steuereinheit aufweisen, die dann wechselweise die beiden Impedanzen bzw. Schwingkreise ansteuert. Die mindestens drei Wicklungen sind vorzugsweise in einer Sternschaltung angeordnet. Dabei sei angemerkt, dass prinzipiell der Elektromotor auch nur zwei Wicklungen aufweisen kann.

In einer weiteren Ausführungsform ist die Auswerte- und Steuereinheit derart ausgebildet, sich vor Fahrtbeginn mit den Anschlusspunkten zu verbinden. Wird dann eindringende Flüssigkeit erfasst, so kann eine Warnmeldung generiert werden und/oder die Inbetriebnahme verhindert werden. Der Vorteil einer Messung vor Fahrtbeginn ist, dass die Messung nicht durch rotierende Teile (z.B. des Rotors) beeinträchtigt wird.

Ein bevorzugtes Anwendungsgebiet ist ein Lenksystem für ein voll- oder teilautomatisiert fahrendes Kraftfahrzeug.

Die Erfindung wird nachfolgend anhand eines bevorzugten Ausführungsbeispiels näher erläutert. Die einzige Figur zeigt eine schematische Teildarstellung eines Lenksystems eines Kraftfahrzeugs.

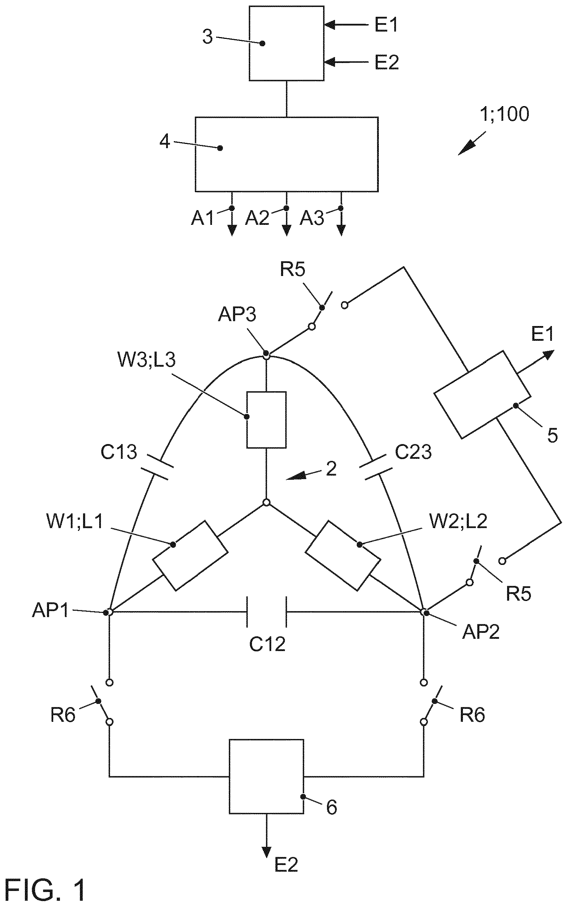

In der Fig. 1 ist ein Teil eines Lenksystems 1 als Antriebsbauteil 100 dargestellt, wobei das Lenksystem 1 einen Elektromotor 2 aufweist, von dem drei Wicklungen W1, W2, W3 des Rotors dargestellt sind, die jeweils eine Induktivität L1-L3 aufweisen. Die drei Wicklungen W1-W3 sind in einer Sternschaltung mit einem Sternpunkt S verschaltet. Jede Wicklung W weist einen Anschlusspunkt AP1-AP3 auf. Zwischen den Wicklungen W1-W3 bilden sich parasitäre Kapazitäten C12, C13 und C23 aus, wobei deren Wert abhängig von einer eintretenden Flüssigkeit ist, da diese wie ein Dielektrikum wirkt. Weiter weist das Lenksystem 1 mindestens ein Steuergerät 3 und eine Leistungselektronik 4 auf, wobei die Leistungselektronik 4 drei Ausgänge A1-A3 aufweist, die mit den korrespondierenden Anschlusspunkten AP1-AP3 verbunden sind. Weiter weist das Lenksystem 1 eine erste Auswerte- und Steuereinheit 5 und eine zweite Auswerte- und Steuereinheit 6 auf, die über Relais R5 bzw. R6 selektiv mit den Anschlusspunkten AP1-AP3 verbunden werden können.

Schaut man nun von den Anschlusspunkten AP3 und AP2 bzw. von den Anschlusspunkten AP1 und AP2 als Anschlussklemmen jeweils in das Netzwerk, so bildet sich ein komplexes LC-Netzwerk mit einer Resonanzfrequenz. Bei angenommener Symmetrie der Induktivitäten L1-L3 und der parasitären Kapazitäten C12, C23, C13 sind dabei die beiden Resonanzfrequenzen gleich. Die Resonanzfrequenz kann dabei beispielsweise unter definierten Bedingungen empirisch bestimmt werden oder aber bei Kenntnis der parasitären Kapazitäten C12, C23, C13 berechnet werden.

Vor Fahrtbeginn schließt nun die erste Auswerte- und Steuereinheit 5 oder das Steuergerät 3 die Relais 5 und die Auswerte- und Steuereinheit 5 erzeugt ein Testsignal in Form einer Anregungsfrequenz für den Schwingkreis unter Berücksichtigung der parasitären Kapazitäten C13, C12, C23 im trockenen Zustand. Erfasst dann die Auswerte- und Steuereinheit 5 eine Schwingung, so ist dies ein Zeichen für keine Flüssigkeit. Wird hingegen keine Schwingung erfasst, spricht dies für eingedrungene Flüssigkeit. Anschließend können die Relais R5 geöffnet werden und die Relais R6 geschlossen werden und die Messung wiederholt werden. Die Ergebnisse E1, E2 werden dann dem Steuergerät 3 mitgeteilt, dass dann bei erfasster Flüssigkeit eine Warnung ausgibt und/oder die Inbetriebnahme des Lenksystems 1 verhindert.

## Patentansprüche

1. Antriebsbauteil (100), insbesondere ein Lenksystem (1) für ein Kraftfahrzeug, umfassend einen Elektromotor (2) und mindestens ein Steuergerät (3), wobei der Elektromotor (2) mindestens eine Wicklung (W1-W3) aufweist, wobei die Wicklung (W1-W3) Anschlusspunkte (AP1-AP3) für eine Leistungselektronik (4) des mindestens einen Steuergeräts (3) aufweist, wobei das Antriebsbauteil (100) mindestens eine Sensorik zur Erfassung von Flüssigkeit aufweist, wobei
die Sensorik eine Auswerte- und Steuereinheit (5, 6) aufweist, die mit den Anschlusspunkten (AP2, AP3; AP1, AP2) der mindestens einen Wicklung (W1-W3) verbunden ist, wobei die Auswerte- und Steuereinheit (5, 6) derart ausgebildet ist, ein Testsignal zu erzeugen und eine Impedanzänderung zu erfassen,
**dadurch gekennzeichnet, dass**
die Auswerte- und Steuereinheit (5, 6) derart ausgebildet ist, dass diese selektiv mit den Anschlusspunkten (AP1-AP3) verbunden oder getrennt werden kann, wobei die Auswerte- und Steuereinheit (5, 6) über Relais (R5, R6) mit den Anschlusspunkten (AP1-AP3) verbunden ist.

2. Antriebsbauteil nach Anspruch 1, **dadurch gekennzeichnet, dass** das Testsignal eine Anregungsfrequenz eines Schwingkreises ist, der durch die mindestens eine Wicklung (W1-W3) und mindestens eine parasitäre Kapazität (C12, C13, C23) zwischen den Anschlüssen (AP1-AP3) der mindestens einen Wicklung (W1-W3) unter definierten Bedingungen gebildet wird.

3. Antriebsanteil nach Anspruch 1 oder 2, **dadurch gekennzeichnet, dass** der Elektromotor (2) mindestens drei Wicklungen (W1-W3) aufweist, wobei das Antriebsbauteil (100) mindestens zwei Sensoriken aufweist, wobei die jeweiligen Auswerte- und Steuereinheiten (5, 6) an unterschiedlichen Anschlusspunkten (AP1-AP3) der Wicklungen (W1-W3) angeordnet sind.

4. Antriebsbauteil nach einem der vorangegangenen Ansprüche, **dadurch gekennzeichnet, dass** die Auswerte- und Steuereinrichtung (5, 6) derart ausgebildet ist, sich vor einem Fahrtbeginn mit den Anschlusspunkten (AP1-AP3) zu verbinden.

5. Antriebsbauteil nach einem der vorangegangenen Ansprüche, **dadurch gekennzeichnet, dass** das Antriebsbauteil (100) als Lenksystem (1) für ein voll- oder teilautomatisiert fahrendes Kraftfahrzeug ausgebildet ist.

## Claims

1. Drive component (100), in particular a steering system (1) for a motor vehicle, comprising an electric motor (2) and at least one control device (3), wherein the electric motor (2) has at least one winding (W1-W3), wherein the winding (W1-W3) has connection points (AP1-AP3) for power electronics (4) of the at least one control device (3), wherein the drive component (100) has at least one sensor system for detecting fluid,
wherein
the sensor system has an evaluation and control unit (5, 6) which is connected to the connection points (AP2, AP3; AP1, AP2) of the at least one winding (W1-W3), wherein the evaluation and control unit (5, 6) is designed such as to generate a test signal and to detect an impedance change,
**characterized in that**
the evaluation and control unit (5, 6) is designed such that it can be selectively connected to or disconnected from the connection points (AP1-AP3), wherein
the evaluation and control unit (5, 6) is connected to the connection points (AP1-AP3) via relays (R5, R6).

2. Drive component according to Claim 1, **characterized in that the** test signal is an excitation frequency of an oscillating circuit that, under defined conditions, is formed by the at least one winding (W1-W3) and at least one parasitic capacitor (C12, C13, C23) between the terminals (AP1-AP3) of the at least one winding (W1-W3).

3. Drive component according to Claims 1 or 2, **characterized in that** the electric motor (2) has at least three windings (W1-W3), wherein the drive component (100) has at least two sensor systems, wherein the respective evaluation and control units (5, 6) arranged at different connection points (AP1-AP3) of the windings (W1-W3).

4. Drive component according to one of the preceding claims, **characterized in that** the evaluation and control device (5, 6) is designed such as to connect to the connection points (AP1-AP3) before the commencement of a journey.

5. Drive component according to one of the preceding claims, **characterized in that** the drive component (100) is designed as a steering system (1) for a motor vehicle driving in a fully or partially automated manner.

## Revendications

1. Élément d'entraînement (100), en particulier système de direction (1) pour un véhicule automobile, comprenant un moteur électrique (2) et au moins un appareil de commande (3), le moteur électrique (2) présentant au moins un enroulement (W1-W3), l'enroulement (W1-W3) présentant des points de raccordement (AP1-AP3) pour une électronique de puissance (4) de l'au moins un appareil de commande (3), l'élément d'entraînement (100) présentant au moins un ensemble de capteurs pour la détection de liquide,
l'ensemble de capteurs présentant une unité d'évaluation et de commande (5, 6), qui est raccordée aux points de raccordement (AP2, AP3 ; AP1, AP2) de l'au moins un enroulement (W1-W3), l'unité d'évaluation et de commande (5, 6) étant conçue pour produire un signal de test et détecter une modification d'impédance,
**caractérisé en ce que**
l'unité d'évaluation et de commande (5, 6) est conçue pour pouvoir être raccordée aux points de raccordement (AP1-AP3) ou séparée sélectivement de ceux-ci,
l'unité d'évaluation et de commande (5, 6) étant raccordée aux points de raccordement (AP1-AP3) par le biais d'un relais (R5, R6).

2. Élément d'entraînement selon la revendication 1, **caractérisé en ce que** le signal de test est une fréquence d'excitation d'un circuit résonant, qui est formée par l'au moins un enroulement (W1-W3) et au moins une capacité parasite (C12, C13, C23) entre les raccords (AP1-AP3) de l'au moins un enroulement (W1-W3) dans des conditions définies.

3. Élément d'entraînement selon la revendication 1 ou 2, **caractérisé en ce que** le moteur électrique (2) présente au moins trois enroulements (W1-W3), l'élément d'entraînement (100) présentant au moins deux ensembles de capteurs, les unités d'évaluation et de commande (5, 6) respectives étant disposées au niveau de points de raccordement (AP1-AP3) différents des enroulements (W1-W3).

4. Élément d'entraînement selon l'une quelconque des revendications précédentes, **caractérisé en ce que** le dispositif d'évaluation et de commande (5, 6) est conçu de manière à se raccorder aux points de raccordement (AP1-AP3) avant un démarrage.

5. Élément d'entraînement selon l'une quelconque des revendications précédentes, **caractérisé en ce que** l'élément d'entraînement (100) est conçu comme un système de direction (1) pour un véhicule automobile à conduite totalement ou partiellement automatisée.
